# EUROPEAN PATENT SPECIFICATION

(11) **EP 4 221 260 B1**
(45) Date of publication and mention of the grant of the patent: **31.12.2025**
(21) Application number: 21871189.3
(22) Date of filing: 25.08.2021
(51) Int. Cl.: H04R 31/00, H04R 7/02, H04R 9/06, H04R 9/02, C08L 53/00

(54) **DIAPHRAGM AND SOUND GENERATING APPARATUS**
MEMBRAN UND SCHALLERZEUGUNGSVORRICHTUNG
DIAPHRAGME ET APPAREIL DE GÉNÉRATION DE SON

(30) Priority: 23.09.2020 CN 202011010803
(43) Date of publication of application: 02.08.2023
(73) Proprietor: Goertek Inc, Weifang, Shandong 261031 (CN)
(72) Inventor: WANG, Cuicui, Weifang, Shandong 261031 (CN); HUI, Bing, Weifang, Shandong 261031 (CN); LING, Fengguang, Weifang, Shandong 261031 (CN); LI, Chun, Weifang, Shandong 261031 (CN)
(74) Representative: ABG Intellectual Property Law, S.L.
(86) International application number: PCT/CN2021/114480
(87) International publication number: WO 2022/062816

(56) References cited:
- CN-A- 105 348 591
- CN-A- 106 817 658
- CN-A- 106 957 466
- CN-A- 106 957 466
- CN-A- 110 267 167
- CN-A- 110 708 638
- CN-A- 110 708 638
- CN-A- 111 866 698
- CN-A- 111 935 625
- JP-A- H05 271 474
- US-A1- 2017 129 982

## Description

### Technical Field

The present invention relates to a technical field of sound generating apparatus, in particular, a diaphragm and a sound generating apparatus.

### Description of Related Art

In related technology, loudspeakers diaphragm mostly use a composite structure of high modulus plastic film (such as PEEK, PAR, PEI, PI, etc.), flexible thermoplastic polyurethane elastomer (TPU), and damping rubber film (such as acrylic rubber, silicone rubber, etc.). However, the comprehensive performance of the above-described diaphragm is poor, for example, the high modulus plastic film layer is difficult to withstand large mechanical vibration in high frequency circumstance, thereby a phenomenon of film rupture occurs; the thermoplastic resin has poor heat and cold resistance, plastic deformation occurs at high temperature, and it is brittle at low temperature.

### SUMMARY

The present invention is directed to a diaphragm defined according to independent claim 1. Further aspects of the invention are defined according to the dependent claims.

The main object according to the present invention is to provide a diaphragm and a sound generating apparatus, it aims to improve the comprehensive performance of the diaphragm, so as to have excellent mechanical strength, cold resistance, resilience and high damping performance.

To achieve the above object, the diaphragm provided in the present invention comprises at least one elastomer layer, and the elastomer layer is made of a rubber compound. The rubber compound comprises nitrile rubber and hydrogenated nitrile rubber, and both the nitrile rubber and the hydrogenated nitrile rubber contain acrylonitrile blocks. In terms of mass percentage, the range of the content of acrylonitrile blocks is 20% to 80%.

In an embodiment, the mass ratio of the nitrile rubber and the hydrogenated nitrile rubber is no less than 1. In an embodiment, the rubber compound further comprises filler. In terms of mass percentage, the content of the filler in the rubber compound is 5% to 60%.

In an embodiment, the filler has a particle size in the range of 10nm to10µm; and/or, the filler is at least one selected from the group consisting of carbon black, white carbon black, calcium carbonate, barium sulfate, montmorillonite, and mica.

In an embodiment, the rubber compound further comprises a vulcanizing agent. In terms of mass percentage, the content of the vulcanizing agent in the rubber compound is 0.5% to 5%.

In an embodiment, the vulcanizing agent comprises a main cross-linking agent and a co-cross-linking agent. The vulcanizing system of the main cross-linking agent is at least one of sulfur vulcanizing systems and peroxide vulcanizing systems, and the co-cross-linking agent is at least one of triallyl isocyanurate and polymaleimide.

In an embodiment, the diaphragm has a tensile strength in the range of 4MPa to 25MPa.

In an embodiment, the diaphragm has a tear strength in the range of 15N/mm to 100N/mm. In an embodiment, the diaphragm has an operating temperature in the range of -80°C to 180°C.

In an embodiment, the damping factor of the diaphragm is greater than 0.15.

In an embodiment, the diaphragm has a density in the range of 0.9g/cm³ to 1.2g/cm³.

In an embodiment, the diaphragm is a single layer, which is made of the rubber compound. Alternatively, the diaphragm is a composite layer, and at least one of the composite layer is made of the rubber compound.

The present invention also provides a sound generating apparatus which comprises a magnetic circuit system and a vibration system. The vibration system comprises the diaphragm, and the diaphragm comprises at least one elastomer layer. The elastomer layer is made of a rubber compound, and the rubber compound comprises nitrile rubber and hydrogenated nitrile rubber. Both the nitrile rubber and the hydrogenated nitrile rubber contain acrylonitrile blocks, and in terms of mass percentage, the range of the content of the acrylonitrile blocks is 20% to 80%.

The diaphragm according to the technical solution of the present invention adopts at least one elastomer layer, the elastomer layer is made of a rubber compound, and the rubber compound comprises nitrile rubber and hydrogenated nitrile rubber. Therefore, the diaphragm may exhibit a better comprehensive performance, and has excellent mechanical strength, cold resistance, resilience and high damping performance. In addition, the diaphragm can be used normally under extreme conditions of high and low temperatures, a phenomenon of film rupture is not easy to occur, and the service life of the diaphragm is longer than the conventional diaphragm material, and the diaphragm has better reliability. The sound generating apparatus applying the diaphragm can be applied in extremely harsh circumstance, while maintaining good acoustic performance. Moreover, the content of the acrylonitrile blocks is reasonably adjusted so that the mass content of the acrylonitrile blocks ranges from 20% to 80%, and such prepared diaphragm has excellent cold resistance, mechanical strength and resilience at the same time.

### BRIEF DESCRIPTION OF DRAWINGS

In order to describe the embodiment of the present invention or the technical solution in the prior art more clearly, a brief description of the drawings required to be used in the description of the embodiment or the prior art will be illustrated below. It is apparently that the drawings in the following description are only some embodiments of the present invention, and other drawings can be obtained according to the structure shown in these drawings for those skilled in the art without any creative work.
Fig. 1 is a schematic diagram of the comparison curve of resonance frequency F0 of the diaphragm according to the embodiment of present invention before and after high temperatures;
Fig. 2 is a schematic diagram of the comparison curve of resonant frequency F0 of a conventional diaphragm before and after high temperatures;
Fig. 3 is a total harmonic distortion test curve of the loudspeaker diaphragm according to an embodiment of the present invention and a conventional diaphragm.

The realization of the object, functional features and advantages of the present invention will be further described with reference to the attached drawings in combined with embodiments.

### DETAILED DESCRIPTIONS

The present invention provides a diaphragm which is applied to a sound generating apparatus, such as loudspeakers.

In an embodiment of the present invention, the diaphragm comprises at least one elastomer layer, and the elastomer layer is made of a rubber compound. The rubber compound comprises nitrile rubber and hydrogenated nitrile rubber. Both the nitrile rubber and the hydrogenated nitrile rubber contain acrylonitrile blocks, and in terms of mass percentage, the content of the acrylonitrile blocks ranges from 20% to 80%.

Nitrile rubber is polymerized from acrylonitrile and butadiene, its molecular formula comprises acrylonitrile blocks and butadiene blocks. The butadiene blocks provide flexibility in the material substrate, so that the nitrile rubber has good low temperature resistance properties. While the nitrile group of the acrylonitrile blocks is a strong polar group, which has high electronegativity, and it can form hydrogen bonds with atoms in the vulcanizing agent, so that the activity of the molecular chain is limited. In addition, the greater the content of the acrylonitrile, the more such alternating structural units, therefore, the glass transition temperature and tensile strength of nitrile rubber increases with the increase of the content of acrylonitrile blocks.

Hydrogenated nitrile rubber is a highly saturated special elastomer obtained by hydrogenation of nitrile rubber, which has excellent thermo-oxidative aging resistance properties. The molecular structure of hydrogenated nitrile rubber also comprises acrylonitrile blocks.

It is understand that, the nitrile group is a strong polar group having high electronegativity, and as the content of acrylonitrile blocks increases, the polarity of the nitrile group is enhanced, the chain flexibility is reduced, and the inter-chain interaction force is increased. The higher the glass transition temperature is, the content of double bond within the molecular chain decreases, the degree of saturation increases, oil resistance and gas tightness are improved, the relative density is increased, the speed of vulcanization is increased, and the tensile strength is increased, while the processability and cold resistance are decreased, and the resilience is decreased. A prepared diaphragm with poor cold resistance is easy to become stiff and brittle in an extreme circumstance of low temperatures, and the risk of diaphragm rupture increases. Therefore, the content of acrylonitrile blocks should be controlled properly, so that the prepared diaphragm has excellent glass transition temperature, tensile strength, density and resilience.

Referring to Table 1, Table 1 shows the effect of the content of acrylonitrile blocks on the diaphragm performance. It can be seen from Table 1, as the content of acrylonitrile blocks increases, the glass transition temperature increases and the tensile strength increases. The density is also increased relatively, while resilience decreases gradually. In particularly, when the content of acrylonitrile blocks is more than 80%, the resilience decreases sharply. In order to ensure it has excellent glass transition temperature, tensile strength, density and resilience, in terms of mass percentage, the content of acrylonitrile blocks ranges from 20% to 80%. For example, the range of the content of acrylonitrile blocks is 20%, 30%, 40%, 50%, 60%, 70%, or 80%.

**Table 1. Effect of the content of the acrylonitrile blocks on diaphragm performance**

| The content of Acrylonitrile Blocks (wt%) | 5 | 20 | 50 | 80 | 85 |
|---|---|---|---|---|---|
| Glass Transition Temperature (°C) | -35.1 | -31.1 | -23.5 | -17.1 | -15.6 |
| Tensile Strength (MPa) | 22.5 | 28.3 | 32.9 | 35 | 40.4 |
| Density (g/cm³) | 0.91 | 0.96 | 1.11 | 1.19 | 1.35 |
| Resilience (%) | 88 | 85 | 81 | 78 | 62 |

Therefore, it is understand that the diaphragm uses at least one elastomer layer, and the elastomer layer is made of a rubber compound. The rubber compound comprises nitrile rubber and hydrogenated nitrile rubber. Therefore, the diaphragm may exhibit a better comprehensive performance having excellent mechanical strength, cold resistance, resilience and high damping performance. In addition, the diaphragm is useable under extreme circumstance of high and low temperatures, the phenomenon of film rupture is not easy to occur, the service life of the diaphragm is longer than the conventional diaphragm material, and the diaphragm has better reliability. The sound generating apparatus applying such diaphragm can be applied in extremely harsh circumstance, while maintaining good acoustic performance. The content of acrylonitrile blocks therein is reasonably adjusted, so that the mass content of acrylonitrile blocks ranges from 20% to 80%. Such prepared diaphragm has excellent cold resistance properties, mechanical strength and resilience at the same time.

Due to the high price of hydrogenated nitrile rubber in the preparation of the rubber compound, in an optional embodiment, the mass ratio of nitrile rubber and hydrogenated nitrile rubber is not less than 1, so that the cost of the rubber compound may be reduced to a certain extent, thereby reducing the production cost of the diaphragm.

Further, the rubber compound further comprises filler. In terms of mass percentage, the content of the filler in the rubber compound is 5% to 60%.

Generally, the filler is inorganic filler with hydrogen, carboxyl group, lactone group, radical group, quinonyl group, and the like that can subject to substitution, reduction, oxidation and other reactions on the surface of the filler. After mixing the filler into the rubber compound, the internal friction between molecular chains of the rubber compound and the steric hindrance increase, the internal loss increases, resulting in the improvement of the damping performance of the material.

Take carbon black as an example. Carbon black is an amorphous structure in which particles form aggregates by physical and chemical bounding with each other. The primary structure of carbon black is consist of aggregates, and there is Van der Waals or hydrogen bonds between the aggregates, so it is able to aggregate into a spatial network structure, that is, the secondary structure of carbon black. The surface of carbon black has hydrogen, carboxyl group, lactone group, radical group, quinonly group, and the like, which can subject to substitution, reduction, oxidation and other reactions. When carbon black is added into the rubber compound, since the strong interaction between the surface of carbon black and the interface of the rubber compound, when the material is stressed, the molecular chain is easier to slide on the surface of carbon black, while it is not easy to detach from carbon black. The rubber compound and carbon black form a strong bond that can slide, and the mechanical strength increases.

It should be noted that when a filler fortifier is added, the content of the filler fortifier added needs to be reasonably controlled, such that the damping is appropriate, the diaphragm polarization is suppressed, the sound quality is good and the distortion is low, the mechanical properties are superior, and the acoustic performance and reliability conditions are satisfied. Optionally, in terms of mass percentage, the content of filler fortifier in rubber compound ranges from 5% to 60%, for example, the content of filler fortifier in rubber compound is 5%, 10%, 20%, 25%, 35%, 45%, 55%, or 60%.

Referring to Table 2, Table 2 shows the effect of the amount of the carbon black added on the mechanical properties of the material. It can be seen from the table, when the parts of carbon black is 0.5%, both the mechanical strength and elongation at break are small, it is because the amount of carbon black is small and its dispersion in the substrate is not uniform, therefore, it is difficult to play a reinforcement effect. As the parts of carbon black added increases, the reinforcement is enhanced, the mechanical strength of the nitrile rubber and the hydrogenated nitrile rubber increases, while the elongation rate at break gradually decreases; when the parts of carbon black is 90 parts, the elongation at break sharply decreases, and there is a risk of film rupture in long-term use when prepared a diaphragm.

**Table 2. Effect of the amount of carbon black added on the mechanical properties of material**

| Amount of Carbon Black (wt%) | 0.5 | 5 | 10 | 60 | 90 |
|---|---|---|---|---|---|
| Elongation at break (%) | 220 | 441 | 505 | 340 | 152 |
| Tensile Strength (MPa) | 5.1 | 15.2 | 19.6 | 25.9 | 35.7 |
| Damping factor | 0.15 | 0.19 | 0.21 | 0.33 | 0.36 |

It should be noted that the hysteresis of the carbon black filled-rubber is much greater than a pure rubber. In fact the greater the amount of the carbon black filled, the greater the hysteresis, and the hysteresis of the rubber is proportional to the square of the amount filled. The damping of the loudspeakers diaphragm is increased, the ability of vibration system that can suppress the polarization phenomenon during the vibration process is strong, and the vibration consistency is good. The commonly used engineering plastic film layer has low damping, and its damping factor is generally less than 0.01, and the damping is small. In the case of an excessive amount of the carbon black filled, the hysteresis of the rubber is greater than the optimal added amount in the rubber, and the reinforcement effect is reduced, and high damping performance will make the heat generation of material increase, and this phenomenon is particularly significant under high frequency.

The rubber compound added with filler according to the present invention is in a high elastic state, the molecular chain is easy to move, the inter-molecular friction is large, and damping performance is good. The damping factor at room temperature is greater than 0.15, the damping performance is excellent, so that the diaphragm may have a lower impedance. The damping performance of the loudspeakers diaphragm is increased, the ability of the vibration system that can suppress the polarization phenomenon during the vibration process is strong, and the vibration consistency is good.

When choosing carbon black as filler fortifier, a suitable filler particle size should be selected, so that surface activity is good, surface energy is high, and thus reinforcement performance is better. Optionally, the particle size of the filler is in the range of 10nm to 10µm. The specific surface area of the carbon black of such particle size is optimal, and the specific surface area of carbon black refers to the sum of the surface area of carbon black particles per unit mass. The surface area of carbon black includes the outer surface area (smooth surface area) and the inner surface area (void inner surface area), and the total surface area of carbon black is the sum of the outer surface and the inner surface. The specific surface area of carbon black is inversely proportional to the particle size, i.e., the specific surface area of carbon black with small particle size is large, and the specific surface area of carbon black with large particle size is small.

It is understand that, the reinforcement of the rubber by carbon black is through the combination of the aggregates surface of carbon black with rubber molecular chains. The combination of carbon black surface and rubber molecular chains is limited in two ways: one is the micro-pores of carbon black aggregates, where the rubber molecular chains may not enter these pores; and the other is the rough surface of carbon black aggregates, where the rubber molecular chains may not be in contact with the concave surface of rough surface. As a fortifier, carbon black must be combined with the rubber molecular chain to play the reinforcement role, and such combination dependents on the surface of carbon black to complete, so the reinforcement also depends on the degree of combination and the size of the surface. The smaller the carbon black particles, the larger the surface per mass of carbon black, and the greater of the reinforcement on the rubber. However, the increase of the specific surface area has a great impact on the processability of the non-vulcanizing rubber, making the filling capacity decreases, the mixing time is increases, dispersion capacity is decreases, roll-off is increases, viscosity is increases, and the smoothness of press-out is enhance, while scorch time, press-out shrinkage and press-out rate are decreased. The particle size is large, the specific surface area is small, the surface activity and surface energy are decreased, and the reinforcement of the rubber is not enough.

The smaller the carbon particles , the smaller the size of micro-crystals, and the more edges, lattice defects and unsaturated charges of micro-crystals, that is, the more surface active sites and high-energy parts, the higher the surface energy. The carbon black with high surface activity has a large reinforcement effect due to the carbon black with high surface activity has more active sites on its surface, and the number of the network structures formed by reaction with rubber molecules in the process of rubber mixing and vulcanization is large. Such network structures formed with carbon black and rubber imparts strength to the vulcanized rubber.

However, if the surface activity of carbon black is too high, the amount of bonded rubber generated during mixing is larger, so that the Mooney viscosity of the rubber increases, the die swell when press out and semi-finished product shrinkage increase, and the press-out rate decreases. If the particle size is too small, since the inter-particle cohesion is large, it is easy to agglomerate, resulting in dispersion difficulties when mixing, and the plasticity decreases and press-out performance deterioration.

**Table 3. The relationship between carbon black particle size and the specific surface area, tear strength, 100% tensile modulus and product F0.**

| | | | | | |
|---|---|---|---|---|---|
| Carbon Black Particle Size/nm | 1 | 10 | 4000 | 10000 | 12000 |
| Specific Surface Area/(m²/g) | 3500 | 2980 | 1500 | 1300 | 800 |
| Tear Strength/ (N/mm) | 85 | 60 | 50 | 35 | 10 |
| 100% Tensile modulus/(MPa) | 1.71 | 1.62 | 1.19 | 1.1 | 0.8 |
| Resonant Frequency F0 | 730 | 680 | 590 | 580 | 550 |

The carbon black particles within this particle size range satisfy the processability of the non-vulcanized rubber, and has good dispersion ability and good roll-off performance, and its surface area is larger, so that the carbon black particles are promote to be closely combined with rubber, and the reinforcement is enhanced. Referring to Table 3, Table 3 shows the effect of different sizes of fillers on the tear strength, 100% tensile modulus and product resonance frequency F0 of rubber compound under the same amount of addition. From Table 3, it can be seen that the smaller the filler size, the higher the reinforcement, the higher the tear strength and 100% tensile modulus, and the higher the corresponding product resonance frequency F0. The larger the filler size, the worse the reinforcement, the lower the tear strength and 100% tensile modulus, and the lower the corresponding product resonance frequency F0 is low. Though the resonance frequency F0 is low, the tear strength is poor, and the film is easy to rupture in the process of high power vibration.

It should be noted that when selecting the filler as the fortifier, the filler may be selected from at least one of the group consisting of carbon black, silica, calcium carbonate, barium sulfate, montmorillonite, and mica.

Moreover, the rubber compound further comprises vulcanizing agent, and in terms of mass percentage, the content of vulcanizing agent in the rubber compound is 0.5% to 5%.

The comprehensive performance of the rubber compound is better when adding such amount of vulcanizing agent, and it has better processability, mechanical properties, oil resistance and thermo-aging resistance.

**Table 4. Effect of the content of the vulcanizing agent on the glass transition temperature and elongation at break of the material**

| | | | | | |
|---|---|---|---|---|---|
| Content of the Vulcanizing Agent (wt%) | 0.1 | 0.5 | 1 | 5 | 15 |
| Glass transition temperature (°C) | -35.8 | -32.5 | -28.2 | -25.1 | -15.8 |
| Elongation at break (%) | 387 | 378 | 319 | 267 | 168 |

**Table 5 shows the vulcanization data for different content of vulcanizing agents**

| Content of the Vulcanizing Agent (wt%) | TS2/s | T90/s |
|---|---|---|
| 0.1 | 29.75 | 203.90 |
| 0.5 | 22.91 | 94.60 |
| 1 | 18.36 | 48.97 |
| 5 | 16.56 | 29.12 |
| 15 | 10.11 | 20.36 |

Wherein, TS2/s characterizes the burning time, T90/s characterizes the time required for the rubber to be vulcanized by 90%.

Referring to Table 4 and Table 5, Table 4 shows the effect of the amount of the vulcanizing agent used on the glass transition temperature and elongation at break of the material, Table 5 shows the vulcanization date of different content of vulcanizing agent. It can be seen that when the content of the vulcanizing agent is small, the effective cross-linking density of the material is low, the mechanical strength of the material is poor, and in the preparation of the diaphragm, it is easy to be deformation in the process of long-term use, and the vulcanization rate of the material is slow, thus the production efficiency is seriously limited, resulting an increase in production cost. With the increase of the amount of the vulcanizing agent, the scorching time of the rubber is shortened, the vulcanization rate increases, the cross-link density of the material increases, and the tensile stress at a given elongation, hardness, resilience of the vulcanized rubber as well as the fatigue cracking resistance under a given load condition are enhanced, the elongation at break decreases, the permanent deformation and dynamic heat generation are reduced, the molecular chain motion is restricted and the glass transition temperature is increased. However, if the cross-linking density is too high, the non-uniformity of the cross-linking bond distribution may be aggravated, resulting in uneven stress distribution.

Optionally, the vulcanization agent comprises the main cross-linking agent and co-cross-linking agent, the main cross-linking agent has a vulcanizing system of at least one of sulfur vulcanizing systems and peroxide vulcanizing systems, and the co-cross-linking agent is at least one of triallyl isocyanurate and polymaleimide.

Here, the main cross-linking agent is used to make the molecules of rubber compound to produce free radicals, and the co-cross-linking agent is used to cause a free radical polymerization with the free radicals in rubber compound. The main cross-linking agent may be one or two mixtures of the sulfur vulcanizing systems and the peroxide vulcanizing systems. Wherein, the peroxide vulcanizing systems may be one or two selected from the group consisting of diisopropyl benzene peroxide (DCP) or 2,5-dimethyl-2,5 (di-tert-butyl peroxy) hexane, and the co-cross-linking agent may be one or two selected from the group consisting of triallyl isocyanurate (TAIC), polymaleimide (PAPI).

The density of the diaphragm according to the present invention is related to the content of the filler fortifier. Generally, the more the content of the filler fortifier, the greater its density. When the density of the rubber compound in the elastomer layer is low, the content of the filler is low, the mechanical performance of the prepared diaphragm is poor, and reliability problems such as collapse, film rupture and the like are easy to occur. When the density is large, the quality of the prepared diaphragm is much better than conventional diaphragms in the same thickness, but it results in a low Fr medium-frequency performance. Therefore, a suitable elastomer density should be selected, so that the prepared diaphragm has both excellent mechanical properties and medium-frequency properties. Optionally, the diaphragm of the present invention has a density ranging from 0.9g/cm³ to 1.20g/cm³.

The diaphragm of the present invention has a tensile strength ranging from 4 MPa to 25 MPa, and the diaphragm has a tear strength ranging from 15 N/mm to 100 N/mm.

The diaphragm of the present invention is not easy to have reliability problems such as film rupture during the application to the use of a sound generating apparatus.

The diaphragm of the present invention may be used normally under extreme circumstances of high and low temperatures, the operating temperature of the diaphragm is in the range of -80°C to 180°C, while having the strength, resilience and damping properties required for the vibration of the diaphragm.

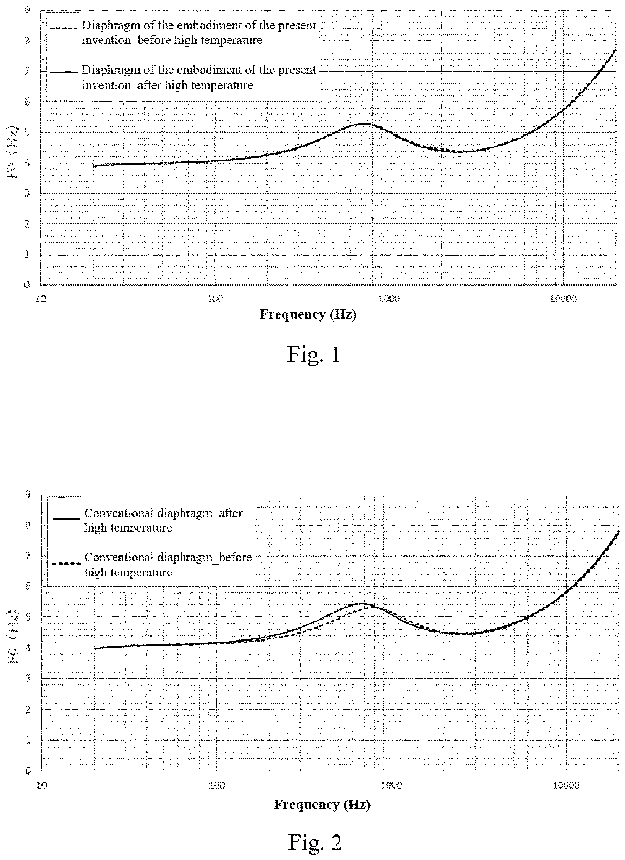

The diaphragm of an embodiment of the present invention and a conventional diaphragm are placed at 100°C and stored for 96h, and the resonance frequency F0 of the diaphragm is tested, the results are shown in Fig. 1 and Fig. 2. As can be seen from the comparison between Fig. 1 and Fig. 2, after the loudspeakers diaphragm of the embodiment of the present invention being stored at 100°C for 96h, the resonant frequency F0 remains stable compared to the conventional diaphragm. The resonant frequency F0 of the conventional diaphragm is slightly reduced after being stored at high temperature, which is caused by plastic deformation and easy-aging of the conventional diaphragm after high temperature. This also indicates that the performance consistency of the diaphragm of the present invention may be maintained after high temperature.

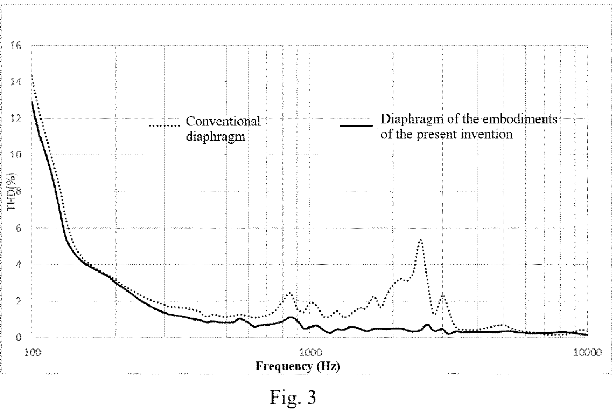

While, both the diaphragm according to the present invention and the conventional diaphragm are placed at 100°C and stored for 96h, after being applied to a loudspeakers, the total harmonic distortion (THD) of the loudspeakers is tested respectively, and the test results are shown in Fig. 3. It can be seen from Fig. 3 that the loudspeakers diaphragm according to the embodiment of the present invention has a lower THD (total harmonic distortion) than the conventional diaphragm after being stored at 100°C for 96h, and has no sharp peaks, etc. This indicates that the loudspeakers diaphragm according to the embodiment of the present invention has excellent resilience even after a high temperature storage, the diaphragm has less swing vibration during vibration, and has better sound quality and listening stability.

In an embodiment of the present invention, the diaphragm is a single layer film, and the single layer film is made of a rubber compound. In this embodiment, the diaphragm is a single layer film structure, that is, an elastomer layer which is made of a rubber compound as mentioned before.

In an embodiment of the present invention, the diaphragm is a composite layer, and at least one layer of the composite layer is made of rubber compound.

The composite diaphragm may comprises two layers, three layers, four layers or five layers, and one of the layers is an elastomer layer made of rubber compound, and the other composite layers may be thermoplastic elastomer layer and/or engineering plastics layer. Wherein, the thermoplastic elastomer in the thermoplastic elastomer layer is at least one selected from the group consisting of thermoplastic polyester elastomer, thermoplastic polyurethane elastomer, thermoplastic polyamide elastomer, and silicone elastomer. The engineering plastics layer is at least one selected from the group consisting of polyether ether ketone, polyaryl ester, polyetherimide, polyimide, polyphenylene sulfide, polyethylene naphthalate, polyethylene terephthalate and polybutylene terephthalate.

The present invention also provides a sound generating apparatus, the sound generating apparatus comprises a magnetic circuit system and a vibration system. The vibration system comprises a diaphragm, and the specific structure of the diaphragm may refer to the embodiment described above. Since the sound generating apparatus adopts all the technical solutions of the foregoing embodiments, it has at least all the beneficial effects brought by the technical solutions of the foregoing embodiments, and will not be described here.

The diaphragm of the present invention may be a folded ring diaphragm or a flat diaphragm. The diaphragm is disposed on the main body of the sound generating apparatus, and the diaphragm is configured to be able to vibrate by driven, thereby generating sound by the vibration. The main body of the sound generating apparatus may be configured with coils, magnetic circuit system and other components to drive the diaphragm to vibrate by electromagnetic induction. The sound generating apparatus provided by the present invention has good sound generating effect and good durability.

## Claims

1. A diaphragm comprising at least one elastomer layer, the elastomer layer is made of a rubber compound, the rubber compound comprises nitrile rubber and hydrogenated nitrile rubber, both the nitrile rubber and the hydrogenated nitrile rubber contain acrylonitrile blocks, and in terms of mass percentage, the range of the content of the acrylonitrile blocks is 20% to 80%.

2. The diaphragm according to claim **1,** wherein a mass ratio of the nitrile rubber and the hydrogenated nitrile rubber is no less than 1.

3. The diaphragm according to claim **1,** wherein the rubber compound further comprises filler, and in terms of mass percentage, the content of the filler in the rubber compound is 5% to 60%.

4. The diaphragm according to claim **3,** wherein the filler has a particle size in the range of 10nm to 10µm; and/or,
the filler is at least one selected from the group consisting of carbon black, white carbon black, calcium carbonate, barium sulfate, montmorillonite, and mica.

5. The diaphragm according to claim **1,** wherein the rubber compound further comprises a vulcanizing agent, and in terms of mass percentage, the content of the vulcanizing agent in the rubber compound is 0.5% to 5%.

6. The diaphragm according to claim **5,** wherein the vulcanizing agent comprises a main cross-linking agent and a co-cross-linking agent, the main cross-linking agent has a vulcanizing system of at least one of sulfur vulcanizing systems and peroxide vulcanizing systems, and the co-cross-linking agent is at least one of triallyl isocyanurate and polymaleimide.

7. The diaphragm according to any one of claims **1** to **6,** wherein the diaphragm has a tensile strength in the range of 4MPa to 25MPa.

8. The diaphragm according to any one of claims **1** to **6,** wherein the diaphragm has a tear strength in the range of 15N/mm to 100N/mm.

9. The diaphragm according to any one of claims **1** to **6,** wherein the diaphragm has an operating temperature in the range of -80°C to 180°C.

10. The diaphragm according to any one of claims **1** to **6,** wherein the diaphragm has a damping factor of greater than 0.15.

11. The diaphragm according to any one of claims **1** to **6,** wherein the diaphragm has a density in the range of 0.9g/cm³ to 1.2g/cm³.

12. The diaphragm according to any one of claims **1** to **6,** wherein the diaphragm is a single layer, and the single layer is made of the rubber compound;
alternatively, the diaphragm is a composite layer, and at least one of the composite layer is made of the rubber compound.

13. A sound generating apparatus, wherein the sound generating apparatus comprises a magnetic circuit system and a vibration system, and the vibration system comprises the diaphragm according to any one of claims **1** to **12.**

## Patentansprüche

1. Membran, umfassend mindestens eine Elastomerschicht, wobei die Elastomerschicht aus einer Kautschukmischung hergestellt ist, welche Nitrilkautschuk und hydrierten Nitrilkautschuk umfasst, wobei sowohl der Nitrilkautschuk als auch der hydrierte Nitrilkautschuk Acrylnitrilblöcke enthalten, und wobei der Gehalt der Acrylnitrilblöcke in Massenprozent im Bereich von 20 % bis 80 % liegt.

2. Membran nach Anspruch 1, **dadurch gekennzeichnet, dass** das Massenverhältnis von Nitrilkautschuk zu hydriertem Nitrilkautschuk mindestens 1 beträgt.

3. Membran nach Anspruch 1, **dadurch gekennzeichnet, dass** die Kautschukmischung ferner einen Füllstoff umfasst, dessen Gehalt in der Kautschukmischung in Massenprozent zwischen 5 % und 60 % liegt.

4. Membran nach Anspruch 3, **dadurch gekennzeichnet, dass** der Füllstoff eine Partikelgröße im Bereich von 10 nm bis 10 µm aufweist und/oder
mindestens eines ausgewählt ist aus der Gruppe bestehend aus Ruß, Kieselsäure, Calciumcarbonat, Bariumsulfat, Montmorillonit und Glimmer.

5. Membran nach Anspruch 1, **dadurch gekennzeichnet, dass** die Kautschukmischung ferner ein Vulkanisationsmittel umfasst, dessen Gehalt in der Kautschukmischung in Massenprozent zwischen 0,5 % und 5 % liegt.

6. Membran nach Anspruch 5, **dadurch gekennzeichnet, dass** das Vulkanisationsmittel ein Hauptvernetzungsmittel und ein Co- Vernetzungsmittel umfasst, wobei das Hauptvernetzungsmittel ein Vulkanisationssystem umfasst, das mindestens eines aus Schwefel-Vulkanisationssystemen und Peroxid-Vulkanisationssystemen beinhaltet, und wobei das Co-Vernetzungsmittel mindestens eines aus Triallylisocyanurat und Polymaleimid ist.

7. Membran nach einem der Ansprüche 1 bis 6, **dadurch gekennzeichnet, dass** sie eine Zugfestigkeit im Bereich von 4 MPa bis 25 MPa aufweist.

8. Membran nach einem der Ansprüche 1 bis 6, **dadurch gekennzeichnet, dass** sie eine Weiterreißfestigkeit im Bereich von 15 N/mm bis 100 N/mm aufweist.

9. Membran nach einem der Ansprüche 1 bis 6, **dadurch gekennzeichnet, dass** sie eine Betriebstemperatur im Bereich von -80 °C bis 180 °C aufweist.

10. Membran nach einem der Ansprüche 1 bis 6, **dadurch gekennzeichnet, dass** sie einen Dämpfungsfaktor von größer als 0,15 aufweist.

11. Membran nach einem der Ansprüche 1 bis 6, **dadurch gekennzeichnet, dass** sie eine Dichte im Bereich von 0,9 g/cm³ bis 1,2 g/cm³ aufweist.

12. Membran nach einem der Ansprüche 1 bis 6, **dadurch gekennzeichnet, dass** sie eine einzelne Schicht aufweist, die aus der Kautschukmischung hergestellt ist, oder dass sie eine Verbundschicht umfasst, wobei mindestens eine der Verbundschichten aus der Kautschukmischung hergestellt ist.

13. Schallerzeugungsvorrichtung, **dadurch gekennzeichnet, dass** sie ein Magnetsystem und ein Schwingsystem umfasst, wobei das Schwingsystem eine Membran nach einem der Ansprüche 1 bis 12 umfasst.

## Revendications

1. Diaphragme comprenant au moins une couche d'élastomère, la couche d'élastomère est constituée d'un composé de caoutchouc, le composé de caoutchouc comprenant du caoutchouc nitrile et du caoutchouc nitrile hydrogéné ; le caoutchouc nitrile et le caoutchouc nitrile hydrogéné contiennent tous deux des blocs d'acrylonitrile, et en pourcentage massique, la teneur en blocs d'acrylonitrile est comprise entre 20 % et 80 %.

2. Diaphragme selon la revendication 1, **caractérisé en ce que** le rapport massique entre le caoutchouc nitrile et le caoutchouc nitrile hydrogéné est d'au moins 1.

3. Diaphragme selon la revendication 1, **caractérisé en ce que** le composé de caoutchouc comprend en outre une charge, et en pourcentage massique, la teneur de la charge dans le composé de caoutchouc est comprise entre 5 % et 60 %.

4. Diaphragme selon la revendication 3, **caractérisé en ce que** la taille des particules de la charge est comprise entre 10 nm et 10 µm ; et/ou la charge est au moins un composé choisi dans le groupe constitué par le noir de carbone, la silice précipitée, le carbonate de calcium, le sulfate de baryum, la montmorillonite et le mica.

5. Diaphragme selon la revendication 1, **caractérisé en ce que** le composé de caoutchouc comprend en outre un agent de vulcanisation, et en pourcentage massique, la teneur de l'agent de vulcanisation dans le composé de caoutchouc est comprise entre 0,5 % et 5 %.

6. Diaphragme selon la revendication 5, **caractérisé en ce que** l'agent de vulcanisation comprend un agent de réticulation principal et un agent de co-réticulation ; l'agent de réticulation principal ayant un système de vulcanisation qui est au moins un des systèmes de vulcanisation au soufre et des systèmes de vulcanisation aux peroxydes ; et l'agent de co-réticulation est au moins un composé choisi dans le groupe constitué par l'isocyanurate de trialyle et le polymaléimide.

7. Diaphragme selon l'une quelconque des revendications 1 à 6, **caractérisé en ce que** le diaphragme présente une résistance à la traction comprise entre 4 MPa et 25 MPa.

8. Diaphragme selon l'une quelconque des revendications 1 à 6, **caractérisé en ce que** le diaphragme présente une résistance au déchirement comprise entre 15 N/mm et 100 N/mm.

9. Diaphragme selon l'une quelconque des revendications 1 à 6, **caractérisé en ce que** la plage de température de fonctionnement du diaphragme est comprise entre -80 °C et 180 °C.

10. Diaphragme selon l'une quelconque des revendications 1 à 6, **caractérisé en ce que** le diaphragme présente un facteur d'amortissement supérieur à 0,15.

11. Diaphragme selon l'une quelconque des revendications 1 à 6, **caractérisé en ce que** le diaphragme présente une densité comprise entre 0,9 g/cm³ et 1,2 g/cm³.

12. Diaphragme selon l'une quelconque des revendications 1 à 6, **caractérisé en ce que** le diaphragme est une couche unique constituée du composé de caoutchouc ; ou le diaphragme est de plusieurs couches composites, et au moins une couche des plusieurs couches composites est constituée du composé de caoutchouc.

13. Appareil générateur de son, **caractérisé en ce qu'**il comprend un système de circuit magnétique et un système de vibration, et le système de vibration comprend le diaphragme selon l'une quelconque des revendications 1 à 12.
